# EUROPÄISCHE PATENTANMELDUNG

(11) **EP 1 743 784 A2**
(43) Veröffentlichungstag der Anmeldung: **17.01.2007**
(21) Anmeldenummer: 06013796.5
(22) Anmeldetag: 04.07.2006
(51) Int. Cl.: B60G 15/06

(54) **Federteller-Auflage**

(30) Priorität: 12.07.2005 DE 102005032449
(71) Anmelder: ZF FRIEDRICHSHAFEN AG, 88046 Friedrichshafen (DE)
(72) Erfinder: Handke, Günther, 97502 Euerbach (DE); Stretz, Klaus, 97437 Hassfurt (DE); Schuler, Manfred, 97456 Dittelbrunn (DE); Renn, Josef, 97337 Dettelbach (DE)

(57) **Zusammenfassung**

Federteller-Auflage (1), umfassend einen Auflagering (5) für eine Fahrzeugtragfeder, wobei dieser Auflagering mindestens ein Formschlusselement aufweist, das mit einem Federteller (3) eine Formschlussverbindung zur Verhinderung einer rotatorischen Relativbewegung zwischen dem Federteller und dem Auflagering bildet, wobei der Federteller für die Formschlussverbindung ein Oberflächenprofil (9) aufweist, in das der Auflagering mit einem Gegenprofil (21) eingreift.

## Beschreibung

Die Erfindung betrifft eine Federteller-Auflage gemäß dem Oberbegriff von Patentanspruch 1.

Bei einem Schwingungsdämpfer in der Bauform eines Federbeins kommt häufig eine Federteller-Auflage zwischen dem Federteller des Federbeins und einer Fahrzeugtragfeder zur Anwendung. Häufig besteht der Grund für diese Maßnahme darin, dass bei einem direkten Kontakt der Fahrzeugtragfeder auf dem Federteller unerwünschte Geräusche auftreten. Des weiteren konnte festgestellt werden, dass sich eine Federteller-Auflage korrosionsmindernd und dauerfestigkeitssteigernd auf die Fahrzeugtragfeder auswirkt.

Damit die Federteller-Auflage zwischen dem Federteller und der Fahrzeugtragfeder bei einer Einfederungsbewegung keine Verdrehbewegung ausführt, die die Auflage im Dauerbetrieb zerstören würde, sind verschiedene Maßnahmen bekannt.

Die FR 2 637 338 A1 beschreibt eine Federteller-Auflage, die in Axialrichtung der Schwingungsdämpferlängsachse Vorsprünge aufweist, die in Öffnungen des Federtellers einrasten. Ein Problem besteht darin, dass mehrere Vorsprünge notwendig sind, um eine möglichst faltenfreie Federteller-Auflage zu erreichen.

In der DE 100 05 849 A1 kommt eine scheibenförmige Federteller-Auflage zur Anwendung, die an ihrem Innendurchmesser einen Vorsprung aufweist, der in eine Aussparung des Federtellers eingreift. Eine generelle Anforderung besteht darin, dass eine axiale Montagerichtung für die Federteller-Auflage auf dem Federteller stattfinden sollte, der Vorsprung aber radial in die Aussparung eingeführt werden muss. Dieser Montagebewegungsablauf ist nur schwerlich zu automatisieren.

Aufgabe der vorliegenden Erfindung ist es, eine Federteller-Auflage zu realisieren, die einerseits einfach zu montieren und andererseits in Umfangsrichtung verdrehgesichert ist.

Erfindungsgemäß wird die Aufgabe dadurch gelöst, dass der Federteller für die Formschlussverbindung ein Oberflächenprofil aufweist, in das der Auflagering mit einem Gegenprofil eingreift.

Der große Vorteil besteht darin, dass man im Vergleich zum aufgezeigten Stand der Technik nicht auf eine Anzahl von bolzenähnlichen Vorsprüngen angewiesen ist, die nur eine bedingt taugliche glatte Einbaulage der Federteller-Auflage ermöglichen, sondern durch das Oberflächenprofil eine großflächige Abstützung erreicht, so dass auch vergleichsweise dünne Federteller-Auflagen verwendbar sind.

Dabei ist vorgesehen, dass der Federteller eine Anzahl von Zentrierflächen für die Fahrzeugtragfeder aufweist, wobei ein Konturenverlauf, gebildet von den Zentrierflächen und dazwischen ausgeführten Verbindungsflächen, einen ungleichmäßigen Radius aufweist und das Gegenprofil der Federteller-Auflage diesem Konturenverlauf zumindest auf einem Längenabschnitt angepasst ist. Der Federteller muss für die Verdrehsicherung der Federteller-Auflage keine Aussparung aufweisen, in die ein Vorsprung der Federteller-Auflage eingreift, sondern allein das geschlossene Oberflächenprofil des Federtellers kann zur Verdrehsicherung genutzt werden.

Um auch bei einer dünnwandigen Federteller-Auflage eine besonders gute Abstützung zu erreichen, bildet ein aus der Ebene des Auflagerings sich erstreckender Rand das Gegenprofil.

In weiterer vorteilhafter Ausgestaltung ist der Rand am Innen- und/oder am Außendurchmesser des Auflagerings ausgeführt.

Als Verliersicherung, insbesondere in dem Montageprozess bis zum Einbau der Fahrzeugtragfeder ist, die Federteller-Auflage mittels einer Axialsicherung mit dem Federteller verbunden.

Gemäß einem vorteilhaften Unteranspruch wird die Axialsicherung von einem zapfenförmigen Element gebildet.

Zur definierten Trennung der Funktionen Axialsicherung und Verdrehsicherung der Federteller-Auflage greift die Axialsicherung in ein Langloch des Federtellers ein. Die Axialsicherung wirkt nur mit den Langloch-Seitenkanten zusammen.

Zum Schutz der Fahrzeugtragfeder gegen Schmutz und Feuchtigkeit ist der Auflagering mit mindestens einer Abflussöffnung versehen.

Damit der Federteller nicht unnötig im Querschnitt geschwächt wird, steht die Abflussöffnung mit dem Langloch in Überdeckung.

Der Federteller verfügt über einen zungenförmigen Endanschlag, der freigestanzt und umgebogen ist, so dass er in etwa parallel zur Federbeinlängsachse verläuft. Der Auflagering ist mit einem Fenster zur Durchführung eines Endanschlags für die Endwindung der Fahrzeugtragfeder ausgeführt.

Der Auflagering muss nicht unbedingt als ein geschlossener Körper ausgeführt sein, sondern kann sich auch auf einen Umfangswinkel beschränken.

Bei einer Variante ist vorgesehen, dass zusätzlich radial zum Auflagerring eine weitere axiale Federstützfläche vorliegt. Diese Maßnahme dient der Sicherheit bei einem Bruch der Fahrzeugfeder, die dann weiterhin geführt wird und keine Schäden, z. B. am Fahrzeugreifen, verursachen kann.

Dazu ist die zusätzliche Federstützfläche auf einem größeren Teilkreis ausgeführt als der Auflagering. Ein Federbruch findet sehr häufig im Bereich der Endwindungen statt, wobei die Endwindung überwiegend einen kleineren Durchmesser aufweist als die folgenden federnden Windungen.

Um für den sehr seltenen Fall des Federbruchs keinen im Durchmesser für den Normalfall überdimensionierten Federteller verwenden zu müssen, verläuft die zusätzliche Federstützfläche zumindest teilweise radial außerhalb des Federtellers.

Die Anbindung zwischen dem Auflagering und dem Tragsteg ist sehr einfach gelöst, indem zwischen dem Auflagerring und der zusätzlichen Federstützfläche ein Tragsteg vorliegt.

Als weitere Maßnahme zur Verdrehsicherung der Federteller-Auflage auf dem Federteller ist der Tragsteg mit dem Auflagerring über ein Übergangsprofil verbunden, wobei das Übergangsprofil in Umfangsrichtung an einer Anschlagfläche des Federtellers zur Anlage kommt.

Zur Versteifung und Abstützung der zusätzlichen Federstützfläche zum Auflagering weist die zusätzliche Federstützfläche einen Endsteg auf, wobei eine besonders günstige Abstützung erreicht werden kann, wenn der Endsteg mit dem Tragsteg verbunden ist.

Eine weitere Maßnahme zur Verdrehsicherung der Federtellerauflage besteht darin, dass der Auflagerring und/oder die zusätzliche Federstützfläche mit einer reibkraftverstärkenden Oberflächenprofilierung versehen ist.

Anhand der folgenden Figurenbeschreibung soll die Erfindung näher erläutert werden.

Es zeigt.
- Fig. 1 - 4: Federteller-Auflage als Einzelteil
- Fig. 5- 6: Federteller als Einzelteil
- Fig. 7 - 8: Federteller-Auflage mit zusätzlicher Federstützfläche
- Fig. 9: Federteller in Kombination mit Federteller-Auflage nach Fig. 7 - 8

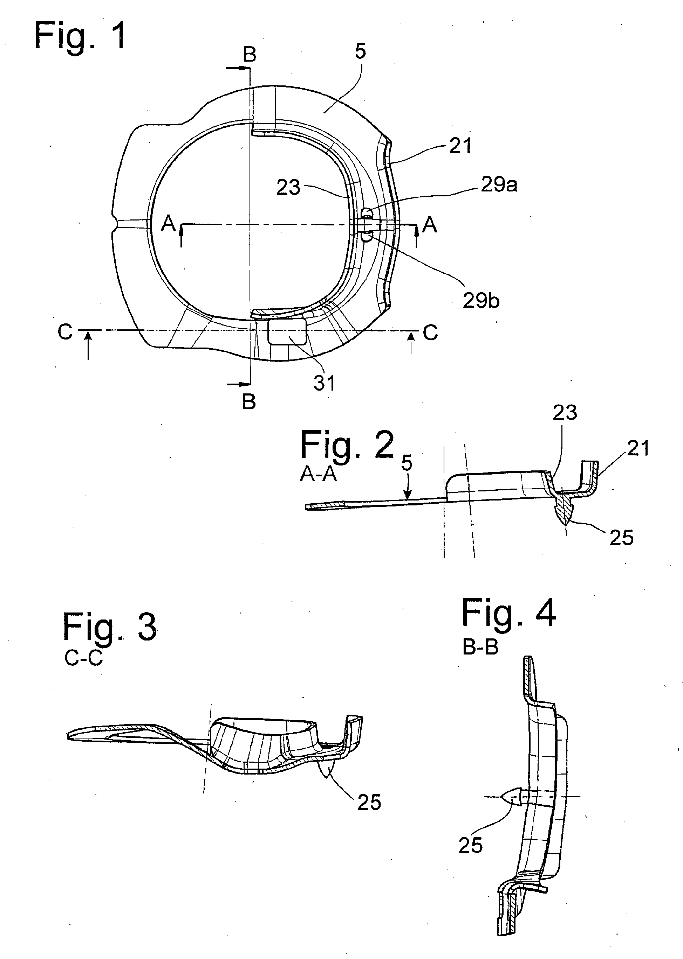

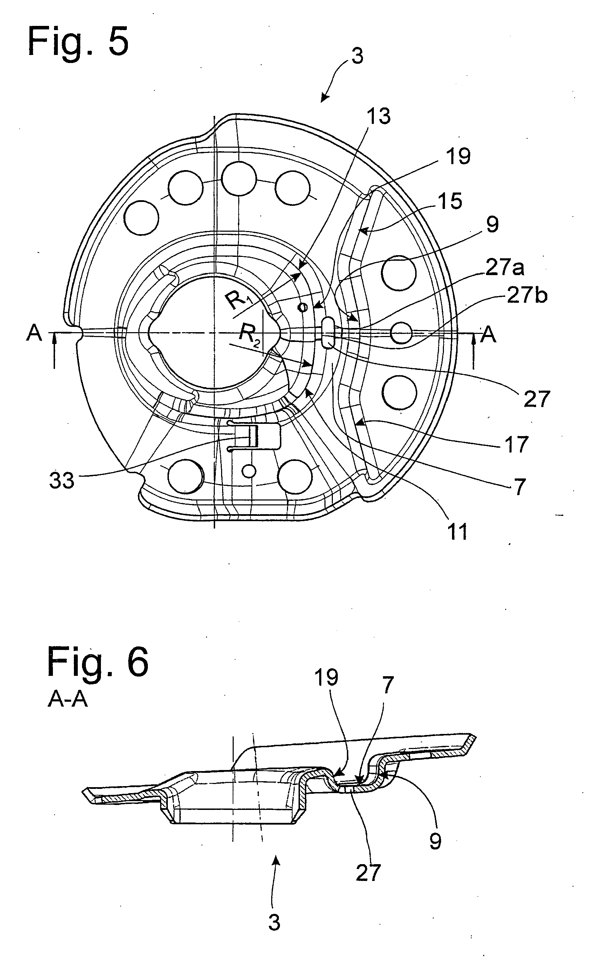

Die Fig. 1 - 4 zeigen verschiedene Ansichten der erfindungsgemäßen Federteller-Auflage 1, die z. B. mit einem Federteller 3 gemäß den Fig. 5 und 6 bei einem Schwingungsdämpfer in der Bauform eines allgemein bekannten Federbeins zur Anwendung kommt. Die Federteller-Auflage 1 umfasst einen Auflagering 5, der axial auf einer Stützfläche 7 des Federtellers (Fig. 5; 6) aufliegt. Der Auflagering muss keinen Vollkreisring beschreiben, sondern kann auch auf einen Umfangswinkel beschränkt ausgeführt sein, wie durch die teilweise Schraffierung in der Fig. 1 verdeutlicht werden soll. Der Auflagering steht im endmontierten Zustand des Federbeins mit einer Endwindung einer nicht dargestellten Fahrzeugtragfeder in Kontakt und soll die unmittelbare Anlage der Fahrzeugtragfeder auf dem Federteller verhindern.

Der Federteller weist ein Oberflächenprofil auf, in das der Auflagering mit einem Gegenprofil eingreift. Wie aus der Zusammenschau der Fig. 5 und 6 erkennbar ist, verfügt der Federteller über einzelne Zentrierflächen 9; 11; 13, die an dem Außen- und Innendurchmesser der Fahrzeugtragfeder angreifen. Zusammen mit Verbindungsflächen 15; 17; 19 ergeben sich Kurvenverläufe, die ungleichmäßige Radien, z. B. R₁; R₂ aufweisen. Jeder Kurvenverlauf stellt ein Oberflächenprofil dar.

Aus der Ebene des Auflagerings 5 (Fig. 1) erstrecken sich am Innen- und am Außendurchmesser Ränder 21; 23, die ein Gegenprofil bilden und zumindest auf einem Längenabschnitt dem Konturenverlauf aus Zentrierflächen und Verbindungsflächen angepasst sind. Das Oberflächenprofil und das Gegenprofil wirken im Prinzip miteinander wie eine Klauenkupplung und verhindern damit eine rotatorische Relativbewegung zwischen der Federteller-Auflage und dem Federteller.

Die beschriebene Formschlussverbindung kann jedoch beim Fertigungsablauf oder dem Transport gelöst werden, wenn die Federvorspannung der Fahrzeugtragfeder noch nicht wirksam ist. Deshalb verfügt die Federteller-Auflage 1 über eine Axialsicherung mit dem Federteller, wobei die Axialsicherung von einem zapfenförmigen Element 25 (Fig. 2-4) gebildet wird. Das zapfenförmige Element weist einen pfeilförmige Querschnitt auf, der in ein Langloch 27 des Federtellers 3 eingreift. Das Langloch verfügt über Seitenkanten 27a, 27b und jeweils Endradien. Das zapfenförmige Element wird jedoch in der vorbestimmten Einbaulage nur von den Seitenkanten gehalten, so dass das Element 25 nur Zugkräfte, jedoch keine Querkräfte übertragen muss.

Wie aus der Fig. 1 ersichtlich ist, verfügt das Auflagering 5 über zwei Abflussöffnungen 29a; 29b, die in der Einbaulage mit dem Langloch 27 im Federteller 3 in Überdeckung stehen, um Schmutz und Feuchtigkeit von der Fahrzeugtragfeder abzuführen.

Des weiteren weist der Auflagering 5 ein Fenster 31 zur Durchführung eines Endanschlags 33, der aus der Ebene der Stützfläche 7 als Zunge umgebogen ist, für die Endwindung der Fahrzeugtragfeder auf.

Insgesamt liegt eine sehr einfache und leichte Federteller-Auflage vor, die durch die Ränder 21; 23 in ihrer Formgebung sehr stabil gestaltet ist.

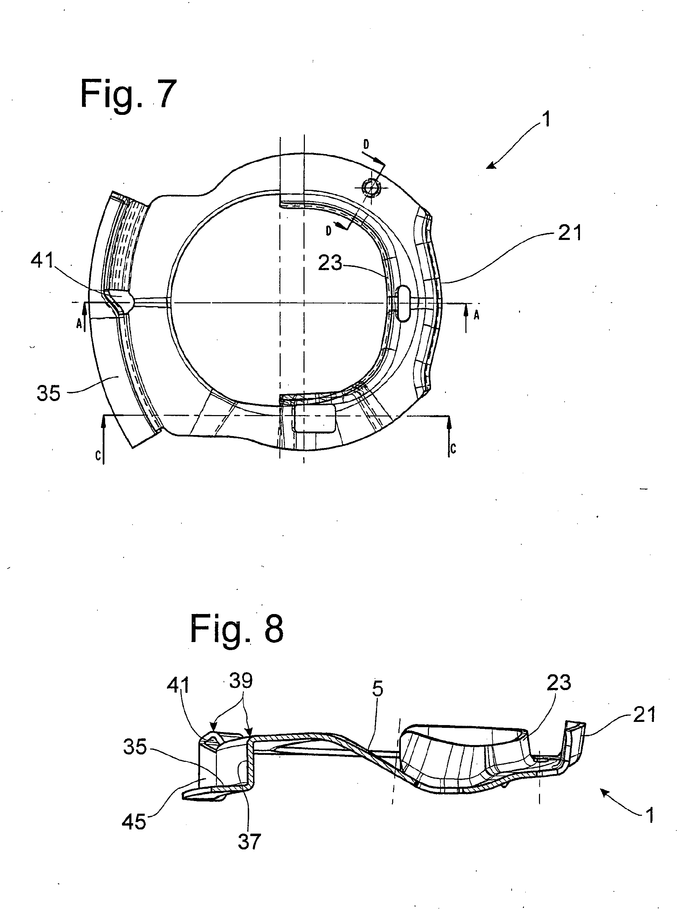

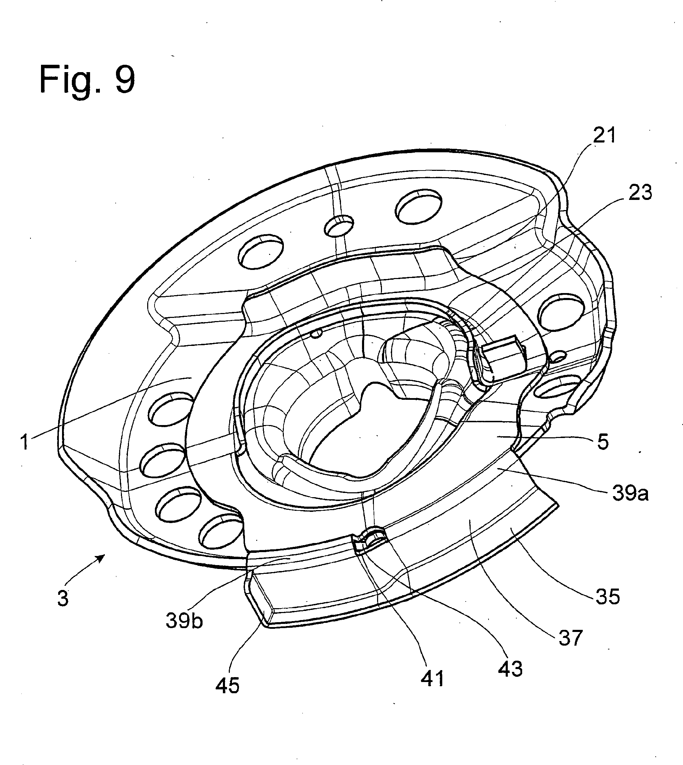

Die Figuren 7 und 8 zeigen eine Federteller-Auflage 1, die eine Weiterentwicklung der Variante nach den Figuren 1 bis 4 darstellt. Der wesentliche Unterschied besteht darin, dass zusätzlich radial zum Auflagerring 5 eine weitere axiale Federstützfläche 35 vorliegt. Die zusätzliche Federstützfläche 35 ist einteilig mit dem Auflagerring auf einem größeren Teilkreis ausgeführt und verläuft zumindest teilweise radial außerhalb des Federtellers 3 (Fig. 9). Wie insbesondere aus der Fig. 8 ersichtlich ist, liegt zwischen dem Auflagerring 5 und der zusätzlichen Federstützfläche 35 ein axial verlaufender Tragsteg 37 vor, wobei der Tragsteg 37 mit dem Auflagerring 5 über ein Übergangsprofil 39 verbunden ist. Das Übergangsprofil besteht auf einem ersten Winkelabschnitt 39 a aus einem einfachen Bogen, der in endseitig von einem Fenster 41 begrenzt wird. (Fig. 7). Dem Fenster 41 schließt sich ein weiterer Winkelabschnitt 39b mit einem winkelförmigen Übergangsprofil (Fig. 8) an. Das Übergangsprofil 39 liegt im Bereich des Fensters 41 an einer Anschlagfläche 43 des Federtellers 3 an, wie in Fig. 9 erkennbar ist.

Die zusätzliche Federstützfläche 35 weist einen insbesondere zur Gestaltfestigkeit einen Endsteg 45 auf, der zusätzlich mit dem Tragsteg 39 verbunden ist. Bei dieser Variante trägt also nicht nur die Formschlussverbindung zwischen den Rändern 21; 23 der Federteller-Auflage bei, sondern auch das Übergangsprofil 39a; 39b. Zusätzlich kann die Oberfläche des Auflagerrings 5 und der zusätzlichen Federstützfläche angerauht oder profiliert sein, um eine größere Reibung zur Fahrzeugtragfeder zu erreichen, so dass keine Relativbewegung zwischen der Federteller-Auflage und der Fahrzeugtragfeder auftritt.

## Patentansprüche

1. Federteller-Auflage, umfassend einen Auflagering für eine Fahrzeugtragfeder, wobei dieser Auflagering mindestens ein Formschlusselement aufweist, das mit einem Federteller eine Formschlussverbindung zur Verhinderung einer rotatorischen Relativbewegung zwischen dem Federteller und dem Auflagering bildet,
**dadurch gekennzeichnet,**
**dass** der Federteller (3) für die Formschlussverbindung ein Oberflächenprofil (9; 11; 13; 15; 17; 19) aufweist, in das der Auflagering (5) mit einem Gegenprofil (21; 23) eingreift.

2. Federteller-Auflage nach Anspruch,
**dadurch gekennzeichnet,**
**dass** der Federteller (3) eine Anzahl von Zentrierflächen (9; 11; 13) für die Fahrzeugtragfeder aufweist, wobei ein Konturenverlauf, gebildet von den Zentrierflächen (9; 11; 13) und dazwischen ausgeführten Verbindungsflächen (15; 17; 19), einen ungleichmäßigen Radius (R₁; R₂) aufweist und das Gegenprofil (21; 23) der Federteller-Auflage (1) diesem Konturenverlauf zumindest auf einem Längenabschnitt angepasst ist.

3. Federtellerauflage nach Anspruch 1,
**dadurch gekennzeichnet,**
**dass** ein aus der Ebene des Auflagerings (5) sich erstreckender Rand (21; 23) das Gegenprofil bildet.

4. Federteller-Auflage nach Anspruch 3,
**dadurch gekennzeichnet,**
**dass** der Rand (21; 23) am Innen- und/oder am Außendurchmesser des Auflagerings (5) ausgeführt ist.

5. Federteller-Auflage nach Anspruch 1,
**dadurch gekennzeichnet,**
**dass** die Federteller-Auflage (1) mittels einer Axialsicherung (25) mit dem Federteller (3) verbunden ist.

6. Federteller-Auflage nach Anspruch 5,
**dadurch gekennzeichnet,**
**dass** die Axialsicherung von einem zapfenförmigen Element (25) gebildet wird.

7. Federteller-Auflage nach Anspruch 5,
**dadurch gekennzeichnet,**
**dass** die Axialsicherung (25) in ein Langloch (27) des Federtellers (3) eingreift.

8. Federteller-Auflage nach Anspruch 1,
**dadurch gekennzeichnet,**
**dass** der Auflagering (5) mit mindestens einer Abflussöffnung (29a; 29b) versehen ist.

9. Federteller-Auflage nach Anspruch 7,
**dadurch gekennzeichnet,**
**dass** die Abflussöffnung (29a; 29b) mit dem Langloch (27) in Überdeckung steht.

10. Federteller-Auflage nach Anspruch 1,
**dadurch gekennzeichnet,**
**dass** der Auflagering (5) mit einem Fenster (31) zur Durchführung eines Endanschlags (33) für die Endwindung der Fahrzeugtragfeder ausgeführt ist.

11. Federteller nach Anspruch 1,
**dadurch gekennzeichnet,**
**dass** der Auflagering (5) auf einen Umfangswinkel beschränkt ausgeführt ist.

12. Federteller nach Anspruch 1,
**dadurch gekennzeichnet,**
**dass** zusätzlich radial zum Auflagerring (5) eine weitere axiale Federstützfläche (35) vorliegt.

13. Federteller nach Anspruch 12,
**dadurch gekennzeichnet,**
**dass** die zusätzliche Federstützfläche (35) auf einem größeren Teilkreis ausgeführt ist als der Auflagering (5).

14. Federteller nach Anspruch 13,
**dadurch gekennzeichnet,**
**dass** die zusätzliche Federstützfläche zumindest teilweise radial außerhalb des Federtellers verläuft.

15. Federteller nach Anspruch 12,
**dadurch gekennzeichnet,**
**dass** zwischen dem Auflagerring (5) und der zusätzlichen Federstützfläche (35) ein Tragsteg (37) vorliegt.

16. Federteller nach Anspruch 15,
**dadurch gekennzeichnet,**
**dass** der Tragsteg (37) mit dem Auflagerring (5) über ein Übergangsprofil (39a; 39b) verbunden ist, wobei das Übergangsprofil (39a; 39b) in Umfangsrichtung an einer Anschlagfläche (43) des Federtellers (3) zur Anlage kommt.

17. Federteller nach Anspruch 12,
**dadurch gekennzeichnet,**
**dass** die zusätzliche Federstützfläche (35) einen Endsteg (45) aufweist.

18. Federteller nach den Ansprüchen 15 und 17,
**dadurch gekennzeichnet,**
**dass** der Endsteg (45) mit dem Tragsteg (37) verbunden ist.

19. Federteller nach einem der Ansprüche 1-18,
**dadurch gekennzeichnet,**
**dass** der Auflagerring (5) und/oder die zusätzliche Federstützfläche (35) mit einer reibkraftverstärkenden Oberflächenprofilierung versehen ist/sind.
